# EUROPÄISCHE PATENTSCHRIFT

(11) **EP 1 964 131 B1**
(45) Veröffentlichungstag und Bekanntmachung des Hinweises auf die Patenterteilung: **22.04.2009**
(21) Anmeldenummer: 06818081.9
(22) Anmeldetag: 16.11.2006
(51) Int. Cl.: G21C 19/317, B01J 35/02, B01J 12/00, G21C 9/06

(54) **KATALYSATOR FÜR DIE REKOMBINATION VON WASSERSTOFF MIT SAUERSTOFF**
CATALYST FOR THE RECOMBINATION OF HYDROGEN WITH OXYGEN
CATALYSEUR DE RECOMBINAISON DE L'HYDROGENE AVEC L'OXYGENE

(30) Priorität: 23.12.2005 DE 102005061985
(43) Veröffentlichungstag der Anmeldung: 03.09.2008
(73) Patentinhaber: Forschungszentrum Jülich GmbH, 52425 Jülich (DE)
(72) Erfinder: REINECKE, Ernst-Arndt, 52146 Würselen (DE); TRAGSDORF, Inga, Maren, 52078 Aachen (DE)
(86) Internationale Anmeldenummer: PCT/DE2006/002009
(87) Internationale Veröffentlichungsnummer: WO 2007/076740

(56) Entgegenhaltungen:
- EP-A1- 0 670 575
- WO-A-00/60608
- CH-A- 483 874
- US-A- 3 397 154
- US-A- 4 009 242

## Beschreibung

Die Erfindung betrifft einen Katalysator, ein Katalysatorsystem und eine Anordnung für die Rekombination von Wasserstoff mit Sauerstoff sowie ein Herstellungsverfahren für einen Katalysator.

### Stand der Technik

Wasserstoff wird in zahlreichen industriellen Prozessen in großen Mengen eingesetzt. Das Hauptproblem beim Umgang mit Wasserstoff ist die Vermeidung zündfähiger Gasgemische. Gemische von Wasserstoff mit Luft sind innerhalb eines sehr weiten Konzentrationsbereichs zwischen 4 und 75 Volumenprozent Wasserstoff zündfähig. Die Selbstentzündungstemperatur eines Wasserstoff-Luft-Gemisches beträgt etwa 560 °C.

Während die Entstehung zündfähiger Gemische im normalen technischen Betriebsablauf vermieden wird, entstehen solche Gemische auch außerhalb der Prozesse in Folge von Leckagen oder Betriebsstörungen. Aber auch in Kernreaktoren kann bei Störfällen mit Kernschmelzen Wasserstoff in einer Größenordnung von 10000 Norm-Kubikmetern gebildet werden. Dieser kann mit dem im Sicherheitsbehälter vorhandenen Luftsauerstoff ein zündfähiges Gemisch bilden, das eine Bedrohung für die Integrität des Sicherheitsbehälters darstellt.

Gerade in einem Kernreaktor ist es auf Grund gesetzlicher und genehmigungsrechtlicher Gründe zwingend ausgeschlossen, im Schadensfall die Atmosphäre auszutauschen und das zündfähige Gemisch so auf eine ungefährliche Wasserstoffkonzentration zu verdünnen. Als Sicherheitsvorkehrungen kommen daher so genannte Rekombinatoren zum Einsatz. Diese magern das Gemisch ab, indem der Wasserstoff in einer exothermen Reaktion mit dem Luftsauerstoff zu Wasserdampf umgesetzt wird. Diese Rekombinatoren können ein Katalysatormaterial enthalten, so dass Wasserstoff und Sauerstoff auch unterhalb der Zündtemperatur in ungefährlicher Weise miteinander reagieren.

Nachteilig kann durch die enorme Rekombinationswärme von etwa 242 kJ/mol der Rekombinator überhitzen und somit selbst zur Zündquelle werden. Rekombinatoren werden daher häufig nur unterhalb der Zündgrenze von 4 Volumenprozent Wasserstoff eingesetzt oder durch den Einbau von Diffusionssperren leistungsmäßig begrenzt. Beispiele hierfür sind aus K. Ledjeff, "Elimination of hydrogen or oxygen from explosive mixtures by catalytic techniques", International Journal of Hydrogen Energy 1987, Heft 12, Nr. 5, Seiten 361-367, sowie aus der DE 199 14 814 C1 bekannt. Dadurch verbleiben jedoch gerade explosive und damit gefährliche Gemische sehr lange im Sicherheitsbehälter.

Aus der DE 197 22 305 sowie der DE 198 52 953 sind technisch weiter entwickelte Rekombinatoren mit passiven Wärme aufnehmenden und speichernden Einbauten sowie Kühlsystemen bekannt, die dem Überhitzungsproblem entgegen wirken sollen. Da diese Einbauten und Systeme jedoch nicht für jeden denkbaren Betriebsfall auslegbar sind, kann auch hier eine Überhitzung mit möglicherweise katastrophalen Folgen nicht ausgeschlossen werden.

Zudem ist ein Rekombinator bis zu seinem möglichen Einsatz für unter Umständen sehr lange Zeiträume der Umgebungsatmosphäre ausgesetzt. Während dieser Standzeit können nachteilig Verunreinigungen aus der Umgebung den Katalysator vergiften, so dass die Rekombination erst mit erheblicher Verzögerung in vollem Umfang anläuft. Rekombinatoren müssen daher regelmäßig gewartet werden.

### Aufgabe und Lösung

Aufgabe der Erfindung ist daher, Mittel zur Verfügung zu stellen, mit denen Wasserstoff und Sauerstoff rekombiniert werden können, wobei gewährleistet ist, dass unabhängig von Konzentration und Homogenität des Wasserstoffs die Temperatur unter keinen Umständen eine vorgegebene Grenztemperatur überschreitet. Diese Mittel sollen auch nach längerer Standzeit unverzüglich ihre volle Leistungsfähigkeit zur Verfügung stellen.

Diese Aufgabe wird erfindungsgemäß gelöst durch einen Katalysator gemäß Hauptanspruch, ein Katalysatorsystem gemäß Nebenanspruch, eine Anordnung gemäß Nebenanspruch sowie ein Verfahren gemäß weiterem Nebenanspruch. Weitere vorteilhafte Ausgestaltungen ergeben sich jeweils aus den darauf rückbezögenen Unteransprüchen.

### Gegenstand der Erfindung

Im Rahmen der Erfindung wurde ein Katalysator gefunden, welcher ein katalytisch aktives Material enthält, das die katalytische Rekombination von Wasserstoff mit Sauerstoff unterstützt. Dieses aktive Material ist in eine Matrix aus einem Metalloxid eingebettet. Es wurde erkannt, dass sich die Rekombinationsrate dieses Katalysators selbst begrenzen kann, so dass die Temperatur des Katalysators auch bei einem noch so großen Angebot an Wasserstoff oder Sauerstoff einen vorgegebenen Grenzwert nicht überschreitet.

Damit in dem erfindungsgemäßen Katalysator eine Rekombination zwischen Wasserstoff und Sauerstoff dauerhaft aufrechterhalten werden kann, muss eine Vielzahl an Prozessen ablaufen. Beispielsweise muss Wasserstoff durch die Matrix aus Metalloxid zum aktiven Material vordringen. Sauerstoff muss aus.dem Metalloxid gelöst werden, um mit dem Wasserstoff reagieren zu können. Der verbrauchte Sauerstoff muss innerhalb der Matrix zum aktiven Material nachdiffundieren und letzten Endes auch von außen in die Matrix hineindiffundieren, damit die Rekombination nicht schon nach kurzer Zeit mangels Sauerstoff erlischt. Alle Prozesse, die für eine Aufrechterhaltung der Rekombination erforderlich sind, weisen Geschwindigkeiten auf, die von der Temperatur abhängen. Der Grundgedanke der Erfindung ist, dass nur ein einziger dieser Prozesse sich bei erhöhter Temperatur verlangsamen muss, um die Rekombinationsrate zu bremsen. In einer Reaktionskaskade aus Elementarprozessen bestimmt die langsamste Teilreaktion die Geschwindigkeit des Gesamtablaufs.

Wird ein derartiger Katalysator einer wasserstoffhaltigen Atmosphäre ausgesetzt, so produziert er durch die Rekombination Wärme, die zumindest zum Teil auch an die Umgebung abgegeben wird. Zu einer gegebenen Wasserstoffkonzentration in der Atmosphäre stellt sich somit eine stationäre Temperatur ein, die einem Gleichgewicht zwischen Wärmeproduktion und Wärmeabfuhr entspricht. Es ist zu erwarten, dass für geringe Wasserstoffkonzentrationen diese stationäre Temperatur zunächst mit der Wasserstoffkonzentration ansteigt. Ab einer gewissen Wasserstoffkonzentration jedoch verhindert der oben beschrieben Bremseffekt einen weiteren Anstieg der Rekombinationsrate und damit der Wärmeproduktion, so dass die Temperatur einen vorgegebenen Grenzwert auf keinen Fall überschreitet. Dieser Grenzwert kann im Katalysator über das Design der Matrix sowie Art und Menge des in die Matrix eingebetteten aktiven Materials festgeschrieben werden.

Somit kann ein derartiger Katalysator insbesondere in Kernreaktoren oder anderen großtechnischen Einrichtungen dazu dienen, störfallbedingt auftretende große Mengen an Wasserstoff unschädlich zu machen. Dabei muss unter allen Umständen gewährleistet sein, dass die Zündtemperatur des Gemisches aus Wasserstoff und Luftsauerstoff nicht überschritten wird. Über das Angebot an Wasserstoff entscheidet jedoch allein der vorliegende Störfall. Zudem ist vom schlimmsten Fall auszugehen, dass sämtliche aktiven Vorrichtungen für eine Temperaturbegrenzung oder Kühlung des Katalysators bedingt durch den Störfall nicht mehr funktionieren. Der erfindungsgemäße Katalysator wird auch in diesem schlimmsten Fall nicht wärmer als ursprünglich vorgegeben.

Besonders in explosionsgefährdeten Bereichen, wie beispielsweise einem Kernreaktor nach einer Kernschmelze, bietet die erfindungsgemäße temperaturabhängige Bremsung der Rekombinationsrate Vorteile gegenüber einer immer wirksamen Bremsung, wie sie beispielsweise durch Verwendung geringerer Mengen an aktivem Material erzielt werden kann. Da vom Start weg die volle Rekombinationsrate des aktiven Materials zur Verfügung steht, wird gegenüber einem Katalysator mit immer wirksamer Begrenzung der Rekombinationsrate pro Zeiteinheit wesentlich mehr Wasserstoff umgesetzt, ohne dass dadurch die Sicherheit der Anlage beeinträchtigt wird. Dadurch werden insbesondere explosionsgefährliche Gasgemische schnellstmöglich unter die Explosionsgrenze abgemagert. Wird dagegen ein Katalysator mit immer wirksamer Begrenzung verwendet, verstreicht wertvolle Zeit, während der der akut explosionsgefährdete Zustand fortbesteht.

Durch Verwendung entsprechend vieler erfindungsgemäßer Katalysatoren, auf die die umzusetzende Wasserstoffmenge aufgeteilt wird, kann Wasserstoff mit einer vorgegebenen Rekombinationsrate umgesetzt werden unter der zusätzlichen Nebenbedingung, dass eine vorgegebene Maximaltemperatur nicht überschritten wird.

In einer besonders vorteilhaften Ausgestaltung der Erfindung ist die Matrix aus dem Metalloxid nur für Wasserstoff durchlässig. Dadurch wird gewährleistet, dass auch bei längerer Standzeit keine Katalysatorgifte aus der Umgebung an das aktive Material gelangen. Die Dauerhaltbarkeit des Katalysators insbesondere bei nur sporädischem Betrieb wird somit deutlich verbessert. Zudem ist auch nach längerer Standzeit ein schnelles Anlaufen der Rekombination gewährleistet, da nicht erst Ablagerungen vom Katalysator entfernt werden müssen. Dies ist insbesondere dann wichtig, wenn der Katalysator nur im Störfall gebraucht wird, dann jedoch die Sicherheit der Anlage von ihm abhängt.

In einer besonders vorteilhaften Ausgestaltung der Erfindung ist das Metalloxid Molybdäntrioxid MoO₃. Das Kristallgitter von Molybdäntrioxid besitzt eine Einlagerungsfähigkeit für molekularen Wasserstoff, die mit steigender Temperatur abnimmt. Überraschenderweise scheint dies auch die Wasserstoffzufuhr zu den katalytisch aktiven Zentren aus aktivem Material zu begrenzen. Es findet offensichtlich keine direkte Adsorption des Wasserstoffs aus der Gasphase an das aktive Material und damit auch keine direkte Oxidation statt. Da die Rekombinationsrate mit der temperaturabhängigen Wasserstoffkonzentration im Kristallgitter des Molybdäntrioxids abnimmt, begrenzt sie sich mit steigender Temperatur im Erfindungssinne selbst. Zudem lagert sich molekularer Wasserstoff auch unterhalb von 20 °C spontan in das Kristallgitter von Molybdäntrioxid ein, so dass auch bei Raumtemperatur ein schnelles Anlaufen der Rekombinationsreaktion gewährleistet ist. Geeignet sind aber auch andere Molybdänoxide.

Vorteilhaft ist das aktive Material ein Edelmetall, insbesondere ein Edelmetall aus der Gruppe Platin, Palladium, Rhenium, Rubidium, Rhodium und Iridium. Diese Edelmetalle befördern bekanntermaßen die Reaktion zwischen Wasserstoff und Sauerstoff und sind dabei vergleichsweise unempfindlich gegen Vergiftung durch Fremdstoffe aus der Umgebung.

Vorteilhaft ist der erfindungsgemäße Katalysator ein durchströmbarer Körper. Ein solcher Körper weist einen Eingang und einen Ausgang auf. Wasserstoffhaltiges Gas wird ihm durch den Eingang zugeführt. Am Ausgang entströmt ihm ein Gas mit einem geringeren Wasserstoffgehalt.

Ein durchströmbarer Körper als Katalysator lässt sich beispielsweise in eine Rohrleitung integrieren. Da er eine große Oberfläche aufweist, wird die bei der Rekombination entstehende Wärme effektiv abgeführt, so dass bei vorgegebener Grenztemperatur eine große Menge Wasserstoff je Zeiteinheit umsetzbar ist. Als durchströmbare Körper sind insbesondere poröse Körper und Schüttungen aus keramischen und metallischen Materialien geeignet. Diese gewährleisten bei einer Anwendung nach dem Prinzip der freien Konvektion eine ausreichende Durchströmung und/oder Umspülung, also hohe Stoff- und Wärmeübergangskoeffizienten bei geringen Druckverlusten, und stellen einen intensiven Kontakt zwischen der zugeführten Atmosphäre und der Matrix mit dem aktiven Material sicher.

Der durchströmte Körper kann aus der Metalloxidmatrix bestehen, wodurch er großtechnisch besonders einfach herstellbar ist. Alternativ kann er jedoch mit der Metalloxidmatrix beschichtet sein. Dadurch kann der Körper selbst aus einem preiswerten und mechanisch belastbaren Grundwerkstoff bestehen.

Vorteilhaft weist der durchströmbare Körper einen wabenförmigen Aufbau auf. Dies maximiert seine für die Rekombination nutzbare Oberfläche und bietet zugleich eine erhöhte mechanische Stabilität. Zudem lassen sich Wasserstoffumsatz und Grenztemperatur durch eine geeignete Anpassung der Wabengeometrie gezielt einstellen. ,

In einer besonders vorteilhaften Ausgestaltung der Erfindung weist der durchströmbare Körper koaxial angeordnete Strömungskanäle auf. Dadurch kann er auch in (zwangs-)durchströmten Systemen, wie beispielsweise Rohrleitungen, eingesetzt werden, ohne die Durchströmung des Systems übermäßig zu behindern.

Im Rahmen der Erfindung wurde ein Katalysatorsystem gefunden, bei der der Eingang eines durchströmbaren Körpers am Ausgang des anderen durchströmbaren Körpers angeordnet ist. Ein solches Katalysatorsystem ist besonders dazu geeignet, in einem (zwangs-)durchströmten System den Gasstrom komplett von Wasserstoff zu befreien, ohne dabei durch die Rekombinationswärme das Gas zu zünden. Wasserstoff, der vom ersten durchströmbaren Körper wegen dessen Selbstbegrenzung nicht verarbeitet wird, gelangt zum zweiten oder einem weiteren durchströmbaren Körper, der mit weniger Wasserstoff beaufschlagt ist und daher noch nicht so warm ist wie der erste. Er wird dort verarbeitet. Die Verarbeitung eines großen Wasserstoffangebots wird somit auf mehrere durchströmbare Körper automatisch so aufgeteilt, dass das Katalysatorsystem sich gleichmäßig erwärmt. Der Gesamtumsatz des Systems ergibt sich additiv aus den Einzelumsätzen.

Vorteilhaft sind die durchströmbaren Körper übereinander angeordnet. Dadurch wird der Gasstrom durch das Katalysatorsystem infolge thermischen Auftriebs beschleunigt. Pro Zeiteinheit kann somit vom Gesamtsystem mehr Wasserstoff abgebaut werden.

Im Rahmen der Erfindung wurde eine Anordnung aus einem durchströmten Gehäuse und einem erfindungsgemäßen durchströmbaren Körper oder Katalysatorsystem gefunden, bei dem der durchströmbare Körper oder das Katalysatorsystem quer zur Durchströmungsrichtung innerhalb des Gehäuses angeordnet ist. Mit einer solchen Anordnung lässt sich der in einer Gasströmung enthaltene Wasserstoff vollständig entfernen oder zumindest bis unter die untere Zündgrenze abmagern; ohne die Durchströmung zu behindern. Dies ist besonders im Fall zwangsdurchströmter Systeme, wie etwa in Abluftanlagen, wichtig. Derartige Abluftanlagen können Räume entlüften, in denen sich Druckbehälter mit brennbaren Gasen befinden oder in die unfall- oder störfallbedingt brennbare Gase eindringen, wie etwa Kernreaktoren, Garagen und Parkhäuser.

Im Rahmen der Erfindung wurde ein Verfahren zur Herstellung eines Katalysators für die Rekombination von Wasserstoff mit Sauerstoff gefunden. Bei diesem Verfahren wird ein atalytisch aktives Material in eine Matrix aus einem Metalloxid eingebettet. Es wurde erkannt, dass die Rekombinationsrate des so entstehenden Katalysators sich in einer Weise begrenzt, dass eine vorher festgelegte Temperatur niemals überschritten wird: Unter den vielen Prozessen, die zur Aufrechterhaltung der Rekombination erforderlich sind, gibt es mindestens einen, dessen Geschwindigkeit mit steigender Temperatur abnimmt. Ab einer gewissen Temperatur bestimmt dieser Prozess die Rekombinationsrate des gesamten Katalysators.

Vorteilhaft wird Molybdäntrioxid als Metalloxid gewählt. Die Matrix aus diesem Metalloxid ist nur für Wasserstoff durchlässig und lagert zudem auch bei Raumtemperatur spontan molekularen Wasserstoff ein. Dadurch wird zum Einen verhindert, dass Fremdstoffe das aktive Material während längerer Standzeiten vergiften, zum Anderen läuft die Rekombination auch bei geringen Temperaturen sofort in voller Stärke an.

Vorteilhaft wird ein Edelmetall als aktives Medium gewählt, insbesondere ein Edelmetall aus der Gruppe Platin, Palladium, Rhenium, Rubidium, Rhodium und Iridium. Diese Edelmetalle befördern bekanntermaßen die Reaktion zwischen Wasserstoff und Sauerstoff und sind dabei vergleichsweise unempfindlich gegen Vergiftung durch Fremdstoffe aus der Umgebung.

In einer besonders vorteilhaften Ausgestaltung der Erfindung wird ein Molybdäntrioxidpulver mit einem Edelmetallsalz, insbesondere Hexachloroplatinsäure oder Palladiumnitrat, imprägniert. Dieser Prozess ist großtechnisch besonders einfach durchführbar. Zur Überführung der Edelmetallsalze in katalytisch aktives elementares Edelmetall wird das Pulver vorteilhaft bei Temperaturen unterhalb 800 °C kalziniert.

Alternativ können Molybdäntrioxid-Teilchen mit vorgeformten Edelmetall-Nanopartikeln aus einer wässrigen Dispersion beschichtet werden. Auf diese Weise lässt sich das Edelmetall besonders fein auf und in der Matrix verteilen, so dass für eine vorgegebene Rekombinationsrate des Katalysators weniger teures Edelmetall erforderlich ist als nach dem Stand der Technik.

In einer besonders vorteilhaften Ausgestaltung der Erfindung wird ein offenporiger Körper mit einem edelmetallhaltigen Molybdäntrioxid imprägniert. Beim Imprägnieren werden auch schwer zugängliche Stellen eines durchströmbaren offenporigen Körpers erreicht. Nicht im oder auf dem Körper angelagertes Molybdänoxid geht dabei nicht verloren, sondern kann zur Beschichtung des nächsten Körpers weiterverwendet werden.

Vorteilhaft wird der Körper mit einer wasserbasierten Beschichtungssuspension in Kontakt gebracht. Wasser ist ein preiswertes und zugleich umweltverträgliches Lösungsmittel.

Vorteilhaft wird der Beschichtungssuspension ein organisches Polymer, wie beispielsweise Polyacrylsäure, zugesetzt. Dieses Polymer stabilisiert die Suspension und führt zu einer Ausbildung von Poren innerhalb der Schicht.

Vorteilhaft wird der Beschichtungssuspension ein keramischer Haftvermittler zugesetzt, beispielsweise in Form eines Böhmit-Sols (AlOOH). Dieses verfestigt die molybdänoxidhaltige Schicht auf der Trägeroberfläche, insbesondere wenn diese zwecks Aktivierung vorteilhaft bei Temperaturen unterhalb 800 °C kalziniert und getempert wird.

### Spezieller Beschreibungsteil

Nachfolgend wird der Gegenstand der Erfindung anhand von Figuren näher erläutert, ohne dass der Gegenstand der Erfindung dadurch beschränkt wird. Es ist gezeigt:
- Figur 1:: Durchströmte Anordnungen mit Katalysatorsystemen.
- Figur 2:: (Figur 3 aus EM) Herstellung eines Katalysators.

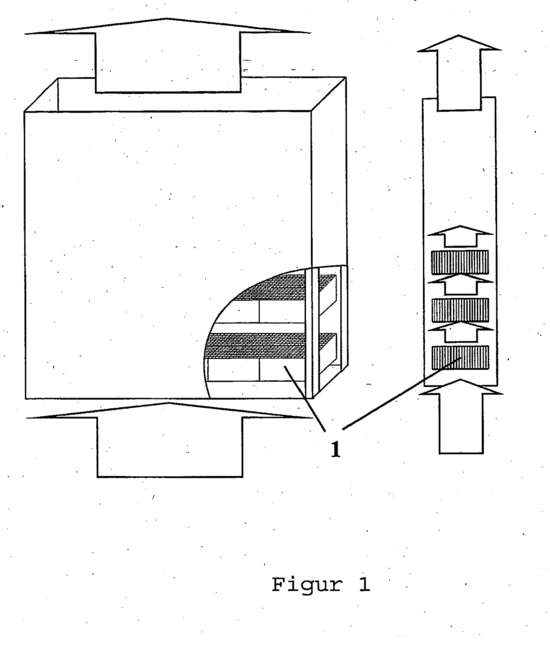

Figur 1 zeigt Anordnungen mit Katalysatorsystemen. Die Anordnungen sind jeweils durchströmt, wobei die durchströmbaren Körper jeweils quer zur Strömungsrichtung angeordnet sind, um die Durchströmung nicht zu behindern. Die durchströmbaren Körper 1 sind auch übereinander angeordnet, so dass das Nachströmen/des wasserstoffhaltigen Gases thermisch beschleunigt wird.

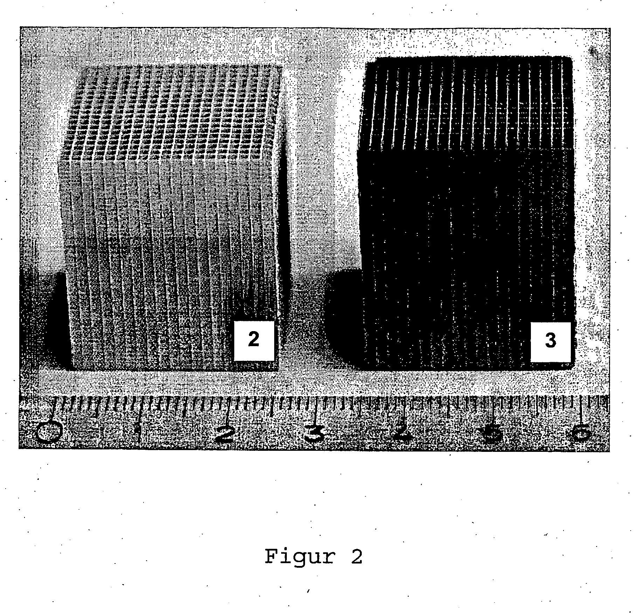

Figur 2 gibt einen Einblick in den Herstellungsprozess eines erfindungsgemäßen Katalysators mit einem Imprägnierverfahren. Der Katalysator ist in diesem Ausführungsbeispiel ein durchströmbarer Körper. Der wabenförmige Trägerkörper 2 besteht aus keramischem Cordierit. Er wird in eine wasserbasierte Beschichtungssuspension getaucht. Zur Erzielung einer sowohl hinsichtlich ihrer Stabilität beziehungsweise Viskosität als auch hinsichtlich ihrer Benetzungseigenschaften und Haftfähigkeit auf der Trägeroberfläche geeigneten Beschichtungssuspension werden der Primärsuspension (Aufschlämmung aus platin-aktiviertem Molybdäntrioxid in Wasser) ein geeigneter Haftvermittler in Form eines Böhmit-Sols (AlOOH) sowie ein geeignetes Suspendiermittel in Form von organischen Polymeren, beispielsweise Polyacrylsäure, zugesetzt. Nach dem Eintauchen wird die überschüssige Suspension durch Absaugen aus dem Trägersubstrat entfernt.

Grundsätzlich sind zur Herstellung der dünnflüssigen Beschichtungsschlicker alle Zuschlagstoffe geeignet, die zur Stabilisierung der Suspension beziehungsweise zur Ausbildung von Poren innerhalb der Schicht und zur Verfestigung des Katalysators auf der Trägeroberfläche beitragen.

Die Verfestigung und Fixierung der Katalysatorschicht erfolgt durch Kalzinierung und Temperung bei Temperaturen unterhalb von 800 °C.

Die imprägnierten Wabenkörperoberflächen 3 werden im Trockenschrank getrocknet sowie mit konstanter Aufheizgeschwindigkeit kalziniert.

## Patentansprüche

1. Katalysator, enthaltend ein katalytisch aktives Material, das die Rekombination von Wasserstoff mit Sauerstoff unterstützt, **dadurch gekennzeichnet, dass** das aktive Material derart in eine Matrix aus einem Metalloxid eingebettet ist, dass die Rate, mit der Wasserstoff und/oder Sauerstoff zum aktiven Material vordringen, mit steigender Temperatur abnimmt.

2. Katalysator nach Anspruch 1, **gekennzeichnet durch** eine Metalloxidmatrix, die nur für Wasserstoff durchlässig ist.

3. Katalysator nach einem der Ansprüche 1 bis 2, **gekennzeichnet durch** Molybdäntrioxid als Metalloxid.

4. Katalysator nach einem der Ansprüche 1 bis 3, **gekennzeichnet durch** ein Edelmetall als aktives Medium.

5. Katalysator nach Anspruch 4, **gekennzeichnet durch** ein Edelmetall aus der Gruppe Platin, Palladium, Rhenium, Rubidium, Rhodium und Iridium.

6. Durchströmbarer Körper als Katalysator nach einem der Ansprüche 1 bis 5.

7. Durchströmbarer Körper nach Anspruch 6, **dadurch gekennzeichnet, dass** er aus der Metalloxidmatrix besteht.

8. Durchströmbarer Körper nach Anspruch 7, **dadurch gekennzeichnet, dass** der Körper mit der Metalloxidmatrix beschichtet ist.

9. Durchströmbarer Körper nach einem der Ansprüche 6 bis 8, **gekennzeichnet durch** einen wabenförmigen Aufbau.

10. Durchströmbarer Körper nach einem der Ansprüche 6 bis 9, **gekennzeichnet durch** koaxial angeordnete Strömungskanäle.

11. Katalysatorsystem, enthaltend mindestens zwei durchströmbare Körper nach einem der Ansprüche 6 bis 10, **dadurch gekennzeichnet, dass** die durchströmbaren Körper in Reihe geschaltet sind.

12. Katalysatorsystem nach Anspruch 11, **dadurch gekennzeichnet, dass** der Eingang eines durchströmbaren Körpers am Ausgang des anderen durchströmbaren Körpers angeordnet ist.

13. Anordnung aus einem durchströmten Gehäuse und einem durchströmbaren Körper nach einem der Ansprüche 6 bis 10 oder einem Katalysatorsystem nach einem der Ansprüche 11 bis 12, **dadurch gekennzeichnet, dass** der durchströmbare Körper oder das Katalysatorsystem quer zur Durchströmungsrichtung innerhalb des Gehäuses angeordnet ist.

14. Verfahren zur Herstellung eines Katalysators für die Rekombination von Wasserstoff mit Sauerstoff, **dadurch gekennzeichnet, dass** ein katalytisch aktives Material derart in eine Matrix aus einem Metalloxid eingebettet wird, dass die Rate, mit der Wasserstoff und/oder Sauerstoff zum aktiven Material vordringen, mit steigender Temperatur abnimmt.

15. Verfahren nach Anspruch 14, **dadurch gekennzeichnet, dass** Molybdäntrioxid als Metalloxid gewählt wird.

16. Verfahren nach einem der Ansprüche 14 bis 15, **dadurch gekennzeichnet, dass** Edelmetall als aktives Medium gewählt wird.

17. Verfahren nach Anspruch 16, **dadurch gekennzeichnet, dass** ein Molybdäntrioxidpulver mit einem Edelmetallsalz, insbesondere Hexachloroplatinsäure oder Palladiumnitrat, imprägniert wird.

18. Verfahren nach Anspruch 17, **dadurch gekennzeichnet, dass** das Pulver bei Temperaturen unterhalb 800 °C kalziniert wird.

19. Verfahren nach Anspruch 16, **dadurch gekennzeichnet, dass** Molybdäntrioxid-Partikel mit Edelmetall-Nanopartikeln aus einer wässrigen Dispersion beschichtet werden.

20. Verfahren nach einem der Ansprüche 14 bis 19, **dadurch gekennzeichnet, dass** ein offenporiger Körper mit einem edelmetallhaltigen Molybdäntrioxid imprägniert wird.

21. Verfahren nach Anspruch 20, **dadurch gekennzeichnet, dass** der Körper mit einer wasserbasierten Beschichtungssuspension in Kontakt gebracht wird.

22. Verfahren nach Anspruch 21, **dadurch gekennzeichnet, dass** der Beschichtungssuspension ein organisches Polymer zugesetzt wird.

23. Verfahren nach einem der Ansprüche 21 bis 22, **dadurch gekennzeichnet, dass** der Beschichtungssuspension ein keramischer Haftvermittler zugesetzt wird.

24. Verfahren nach einem der Ansprüche 21 bis 23, **dadurch gekennzeichnet, dass** die imprägnierte Beschichtung bei Temperaturen unterhalb von 800 °C kalziniert und getempert wird.

## Claims

1. Catalyst, containing a catalytically active material, which supports the recombination of hydrogen with oxygen, **characterised in that** the active material is embedded into a matrix made of a metal oxide in such a way that the rate, at which hydrogen and/or oxygen reaches the active material, decreases with increasing temperature.

2. Catalyst according to claim 1, **characterised by** a metal oxide matrix, which is only permeable to hydrogen.

3. Catalyst according to one of claims 1 to 2, **characterised by** molybdenum trioxide as the metal oxide.

4. Catalyst according to one of claims 1 to 3, **characterised by** a precious metal as the active medium.

5. Catalyst according to claim 4, **characterised by** a precious metal from the platinum, palladium, rhenium, rubidium, rhodium and iridium group.

6. Body, which may be flowed through, as the catalyst according to one of claims 1 to 5.

7. Body, which may be flowed through, according to claim 6, **characterised in that** it consists of the metal oxide matrix.

8. Body, which may be flowed through, according to claim 7, **characterised in that** the body is coated with the metal oxide matrix.

9. Body, which may be flowed through, according to one of claims 6 to 8, **characterised by** a honeycomb shaped structure.

10. Body, which may be flowed through, according to claims 6 to 9, **characterised by** coaxially arranged flow channels.

11. Catalyst system, containing at least two bodies, which may be flowed through, according to one of claims 6 to 10, **characterised in that** the bodies, which may be flowed through, are connected in series.

12. Catalyst system according to claim 11, **characterised in that** the input of a body, which may be flowed through, is arranged at the output of the other body, which may be flowed through.

13. Arrangement of a housing, which is flowed through, and a body, which may be flowed through, according to one of claims 6 to 10 or a catalyst system according to one of claims 11 to 12, **characterised in that** the body, which may be flowed through, or the catalyst system is arranged crosswise to the direction of flow inside the housing.

14. Method for producing a catalyst for the recombination of hydrogen with oxygen, **characterised in that** a catalytically active material is embedded into a matrix made of a metal oxide in such a way that the rate, at which hydrogen and/or oxygen reaches the active material, decreases with increasing temperature.

15. Method according to claim 14, **characterised in that** molybdenum trioxide is selected as the metal oxide.

16. Method according to one of claims 14 to 15, **characterised in that** precious metal is selected as the active medium.

17. Method according to claim 16, **characterised in that** a molybdenum trioxide powder is impregnated with a precious metal salt, particularly hexchloroplatinic acid or palladium nitrate.

18. Method according to claim 17, **characterised in that** the powder is calcined at temperatures below 800° C.

19. Method according to claim 16, **characterised in that** molybdenum trioxide particles are coated with precious metal nanoparticles from an acqueous dispersion.

20. Method according to one of claims 14 to 19, **characterised in that** a body with open pores is impregnated with a molybdenum trioxide containing precious metal.

21. Method according to claim 20, **characterised in that** the body is brought into contact with a water based coating suspension.

22. Method according to claim 21, **characterised in that** an organic polymer is added to the coating suspension.

23. Method according to one of claims 21 to 22, **characterised in that** a ceramic coupling agent is added to the coating suspension.

24. Method according to one of claims 21 to 23, **characterised in that** the impregnated coating is calcined and tempered at temperatures below 800° C.

## Revendications

1. Catalyseur contenant un matériau catalytiquement actif qui favorise la recombinaison de l'hydrogène avec l'oxygène, **caractérisé en ce que** le matériau actif est englobé dans une matrice d'un oxyde métallique de telle sorte que le taux de progression de l'hydrogène et/ou l'oxygène vers le matériau actif, diminue lorsque la température augmente.

2. Catalyseur selon la revendication 1, **caractérisé par** une matrice d'oxyde métallique qui est perméable uniquement à l'hydrogène.

3. Catalyseur selon l'une des revendications 1 à 2, **caractérisé par** un trioxyde de molybdène en tant qu'oxyde métallique.

4. Catalyseur selon l'une des revendications 1 à 3, **caractérisé par** un métal noble en tant que milieu actif.

5. Catalyseur selon la revendication 4, **caractérisé par** un métal noble du groupe comprenant le platine, le palladium, le rhénium, le rubidium, le rhodium et l'iridium.

6. Corps pouvant être traversé en tant que catalyseur selon l'une des revendications 1 à 5.

7. Corps pouvant être traversé selon la revendication 6, **caractérisé en ce qu'**il est constitué de la matrice d'oxyde métallique.

8. Corps pouvant être traversé selon la revendication 7, **caractérisé en ce que** le corps est revêtu de la matrice d'oxyde métallique.

9. Corps pouvant être traversé selon l'une des revendications 6 à 8, **caractérisé par** une structure en nid d'abeille.

10. Corps pouvant être traversé selon l'une des revendications 6 à 9, **caractérisé par** des canaux d'écoulement disposés de façon coaxiale.

11. Système de catalyseur contenant au moins deux corps pouvant être traversés selon l'une des revendications 6 à 10, **caractérisé en ce que** les corps pouvant être traversés sont commutés en ligne.

12. Système de catalyseur selon la revendication 11, **caractérisé en ce que** l'entrée d'un corps pouvant être traversé est disposée à la sortie de l'autre corps pouvant être traversé.

13. Montage constitué d'un logement pouvant être traversé et d'un corps pouvant être traversé selon l'une des revendications 6 à 10 ou d'un système de catalyseur selon l'une des revendications 11 à 12, **caractérisé en ce que** le corps pouvant être traversé ou le système de catalyseur est disposé perpendiculairement au sens d'écoulement dans le logement.

14. Procédé de production d'un catalyseur pour la recombinaison de l'hydrogène avec l'oxygène, **caractérisé en ce qu'**un matériau catalytiquement actif est englobé dans une matrice d'un oxyde métallique de telle sorte que le taux de progression de l'hydrogène et/ou l'oxygène vers le matériau actif, diminue lorsque la température augmente.

15. Procédé selon la revendication 14, **caractérisé en ce que** l'on choisit comme oxyde métallique, le trioxyde de molybdène.

16. Procédé selon l'une des revendications 14 à 15, **caractérisé en ce que** l'on choisit comme milieu actif, un métal noble.

17. Procédé selon la revendication 16, **caractérisé en ce qu'**une poudre de trioxyde de molybdène est imprégnée d'un sel de métal noble, en particulier d'acide hexachloroplatinique ou de nitrate de palladium.

18. Procédé selon la revendication 17, **caractérisé en ce que** la poudre est calcinée à des températures inférieures à 800° C.

19. Procédé selon la revendication 16, **caractérisé en ce que** les particules de trioxyde de molybdène sont revêtues de nanoparticules de métal noble provenant d'une dispersion aqueuse.

20. Procédé selon l'une des revendications 14 à 19, **caractérisé en ce qu'**un corps à pores ouverts est imprégné avec un trioxyde de molybdène contenant un métal noble.

21. Procédé selon la revendication 20, **caractérisé en ce que** le corps est mis en contact avec une suspension de revêtement à base aqueuse.

22. Procédé selon la revendication 21, **caractérisé en ce que** l'on ajoute à la suspension de revêtement, un polymère organique.

23. Procédé selon l'une des revendications 21 à 22, **caractérisé en ce que** l'on ajoute à la suspension de revêtement, un agent adhésif céramique.

24. Procédé selon l'une des revendications 21 à 23, **caractérisé en ce que** le revêtement imprégné est calciné et trempé à une température inférieure à 800° C.
